(19)

**Europäisches Patentamt**
**European Patent Office**
**Office européen des brevets**

(11) **EP 1 355 092 B1**

(12) **EUROPEAN PATENT SPECIFICATION**

(45) Date of publication and mention
of the grant of the patent:
**11.01.2012 Bulletin 2012/02**

(51) Int Cl.:
***F16H 61/28*** *(2006.01)*

(21) Application number: **03008927.0**

(22) Date of filing: **16.04.2003**

(54) **Shift control apparatus and shift control system provided with the same**

Gangschaltgerät und Steuerungssystem dafür

Appareil de changement de vitesse et système de commande pour cet appareil

(84) Designated Contracting States:
**DE FR GB**

(30) Priority: **16.04.2002 JP 2002113408**

(43) Date of publication of application:
**22.10.2003 Bulletin 2003/43**

(73) Proprietors:
• **AISIN SEIKI KABUSHIKI KAISHA**
**Kariya-shi, Aichi-ken 448-0032 (JP)**
• **AISIN AI Co., Ltd.**
**Nishio-shi,**
**Aichi-ken (JP)**

(72) Inventors:
• **Mineno, Akira**
**Kariya-shi,**
**Aichi-ken (JP)**

• **Terakawa, Tomomitsu**
**Anjo-shi,**
**Aichi-ken (JP)**
• **Aoyama, Yoshiyuki**
**Nishio-shi,**
**Aichi-ken (JP)**

(74) Representative: **TBK**
**Bavariaring 4-6**
**80336 München (DE)**

(56) References cited:
**EP-A1- 0 545 597      EP-A1- 0 638 743**
**EP-A2- 0 294 797      JP-A- 2000 248 973**

EP 1 355 092 B1

**Description**

FIELD OF THE INVENTION

This invention generally relates to a shift control apparatus for a transmission, by which a predetermined shift stage among plural shift stages is established in response to operation of a shift and select operations mechanism and a shift stroke determined by the shift and select operations mechanism is controlled so as to correspond to a target shift stroke, and a shift control system provided with the shift control apparatus.

BACKGROUND OF THE INVENTION

Conventionally, an automated manual transmission which are structurally based on a manual transmission (hereinafter, referred to as an MT) has been known. The automatic manual transmission performs an automatic shift operation based on the vehicle driving condition or a driver's intention by use of an actuator (hereinafter, referred to as an ACT) installed on a vehicle.

The ACT functions as a shift and select operations mechanism and performs shift and select operations in the MT corresponding to shift and select operations of a shift lever by the driver. The ACT receives a signal representing a control command from a shift control apparatus and performs a shift operation of a predetermined member disposed in the MT.

The automated manual transmission is required to perform the shift operation at a distinctly high speed so as to expedite a shift operation time corresponding to the vehicle condition. The automated manual transmission is further required to possess a high-precision shifting performance to stop the shift movement especially because of a narrow gate width. Further, if the shift operation is performed at an unnecessarily high speed at a balk point, i.e. when a chamfer of a sleeve contacts with a chamfer of a synchronizing ring, a shift shock may occur, thereby leading to damage on the synchronizing ring. Therefore, the shift operation speed at the balk point may be restrained as needed.

As described above, when the shift operation is required to be automatically performed, some requirements regarding the shift operation as described above should be satisfied so as to perform the automatic shift operation in the MT. In view of the aforementioned point, inventors of this invention attempted to provide a shift control mechanism capable of pexfoxming a preferred shift operation. However, even if a PD control is performed considering a position deviation in a direction of the shift operation, the above-described requirements were experimentally verified that they can not be satisfied.

Further, this type of control mechanism is generally lacking robustness. Performance of the MT and the ACT may widely fluctuate due to individual difference of the MT and the ACT respectively, secular change thereof, change of ambient temperature thereof, and the like. Therefore, the high-precision to stop the shift movement and the shit operation speed was experimentally verified that they may not be able to be achieved as being required. In view of this point, control gains for the respective requirements can be pre-adjusted corresponding to the above-described difference and changes. However, a required time for the adjustment may be inpreferably increased.

Document EP 0 545 597 A1, which is considered being the closest prior art and shows the preamble of claim 1, discloses a transmission shifter having an automatic adjustment of control parameters. A position-feedback-control servomechanism for shifting the transmission of a vehicle has a control algorithm that adjusts the loop gains in a proportional-integral-differential controller to compensate for manufacturing variations in the apparatus as well as for temperature changes and wear. The resulting control system moves the shifting servomechanism into the selected positions.

SUMMARY OF THE INVENTION

It is an object of the present invention to provide an improved shift control apparatus capable of satisfying precisions required for performing a preferable shift operation and possessing a high robustness so as not to be affected due to fluctuation of the performance of the MT and the ACT.

This object is achieved by a shift control apparatus according to claim 1. Advantageous further developments are as set forth in the dependent claims.

Therefore, the shift stroke can be preferably controlled in combination of each means and mechanism. Especially, the shift control apparatus having the stabilizing controlling means and the PID controlling means can preferably control the shift stroke so as not to be diverged. Further, the shift control apparatus having the reference model controlling means can preferably perform the control of the shift operation with a high precision and a preferable speed. Still further, the shift control apparatus having the disturbance observing mechanism can restrain the shift operation from being affected by disturbance.

BRIEF DESCRIPTION OF THE DRAWING FIGURES

The foregoing and additional features and characteristics of the present invention will become more apparent from the following detailed description considered with reference to the accompanying drawing figures wherein:

FIG. 1 is a block view illustrating a shift control apparatus of an automated manual transmission for a vehicle according to an embodiment of the present invention;

FIG. 2 is a time chart explaining a relationship between a target shift stoke value R and a target shift stroke r(t) outputted from a rate limiter RL illustrated in FIG. 1;

FIG. 3 is a time chart explaining a relationship between a reference model output $r_{std}(t)$ and the target shift stroke r(t) according to the embodiment of the present invention;

FIG. 4 is a graph illustrating a gain map of a proportional gain $K_{FF}$ employed for an error feedback control according to the embodiment of the present invention;

FIG. 5 is an explanatory view for explaining a mathematical model of a controlled object P(s) illustrated in FIG. 1;

FIG. 6 illustrates a flow chart for explaining a shift control by a shift control apparatus 1 illustrated in FIG. 1;

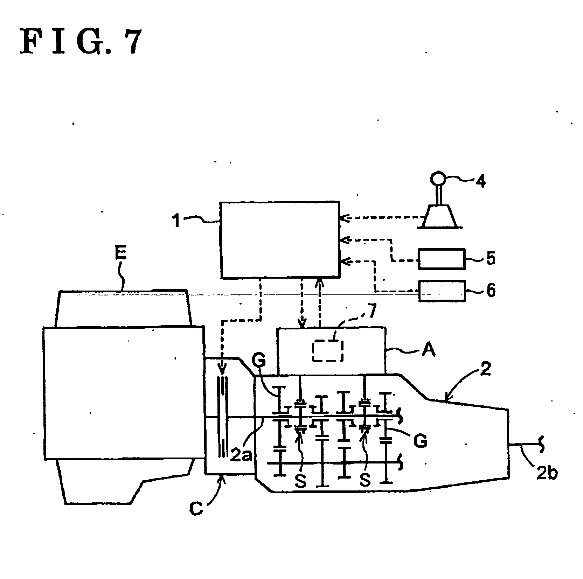

FIG. 7 is a block view schematically illustrating a structure of the automated manual transmission and around thereof according to the embodiment of the present invention; and

FIG. 8 is an explanatory view for explaining shift and select operations of a shift lever illustrated in FIG. 1.

DETAILED DESCRIPTION OF THE INVENTION

An embodiment of the present invention will be described hereinbelow in detail with reference to the accompanying drawings.

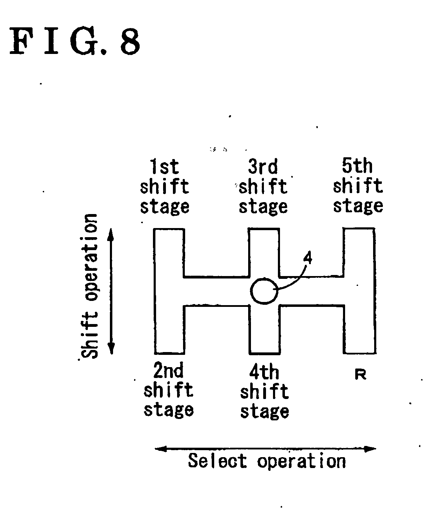

As illustrated in FIG. 8, a driving force from an engine E is transmitted to an input shaft 2a of an automated manual transmission 2 (hereinafter, referred to as a transmission 2) via a clutch C. The driving force is changed through a shift operation in the transmission 2 and is outputted via an output shaft 2b of the transmission 2. The transmission 2 is provided with plural pairs of shift gears G, each pair of which possess a different gear ratio, and plural synchronizing mechanisms S, each of which operates for establishing a particular shift stage. The transmission 2 is further provided with a shift and select operations mechanism A for performing a shift operation of the synchronizing mechanisms S.

The shift and select operations mechanism A is inputted with a command signal from a shift control apparatus 1. A shift stroke and a select stroke of the shift and select operations mechanism A is transmitted as operation information to the shift control apparatus 1. The shift stroke and the select stroke of the shift and select operations mechanism A are controlled based upon the command signal from the shift control apparatus 1. The shift control apparatus 1 is further inputted with a signal representing an operation condition of a shift lever 4. The shift control apparatus 1 generates the command signal based upon the shift lever signal and performs an automatic shift operation. The shift control apparatus 1 is still further inputted with a signal representing operation of an accelerating pedal 6, a signal representing operation of a brake pedal 5, and the like. As described above, the shift control apparatus 1 of the present invention possesses a known mechanism capable of performing a shift control based upon a vehicle condition.

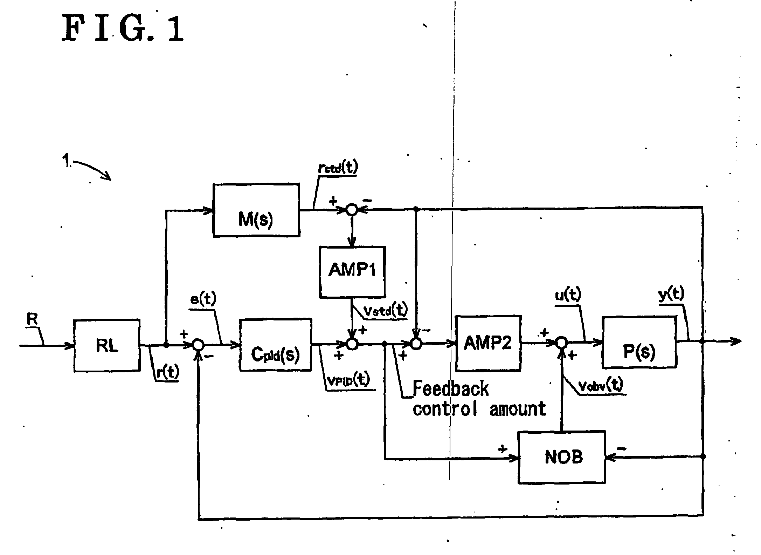

When the shift lever 4 is operated in a direction for the shift operation, the shift control apparatus 1 automatically generates the command signal for the shift operation to be transmitted to the shift and select operations mechanism A. More specifically, as illustrated in FIG. 1, a target shift stroke value R determined corresponding to the operation of the shift lever 4 is inputted into the shift control apparatus 1 so as to obtain a shift stroke y(t), which is a function of a time t. An indicating electric current u(t) applied to a controlled object P(s) is calculated in accordance with a predetermined computing manner.

Next, the following description will be given for explaining the shift control apparatus 1 so as to obtain the desired shift stroke y(t). A mainstream of the control goes through a rate limiter RL (i.e. a rate limiting means), a PID controller $C_{pid}(s)$ (i.e. a PID controlling means), a second proportional amplifier AMP2 (i.e. a second proportional controlling means, a stabilizing controlling means), and the controlled object P(s). The shift control apparatus 1 can perform a stabilizing control along with a PID control (i.e. a proportional-integral-plus differential control) by use of a feedback loop with the second proportional amplifier AMP2 and the other feedback loop with the PID controller $C_{pid}(s)$. Therefore, the shift control apparatus 1 functions as the PID controlling means and the stabilizing controlling means by the simple feedback mechanism.

The shift control apparatus 1 is provided with a reference model M(s) and a first proportional amplifier AMP 1 (i.e. a first proportional controlling means, a reference model controlling means). The shift control apparatus 1 performs an error feedback control based upon a deviation of the shift stroke y(t) relative to a reference model output $r_{std}$(t) from the reference model M(s) (i.e. the reference model controlling means). An error feedback amount is then multiplied by a proportional gain KFF of the first proportional amplifier AMP1 (i.e. the reference model controlling means). Therefore, the shift control apparatus 1 functions as the reference model controlling means as well. The shift control apparatus 1 is further provided with a disturbance observer NOB (i.e. a disturbance observing mechanism) so as to eliminate disturbance determined in accordance with a relationship of inputs to a mathematical model of the controlled object P(s) and outputs therefrom. The controlled object P(s) is stabilized by the second proportional amplifier AMP2 in the feedback loop.

Next, the following description will be given for explaining control by each control element.

1. Rate limiter RL

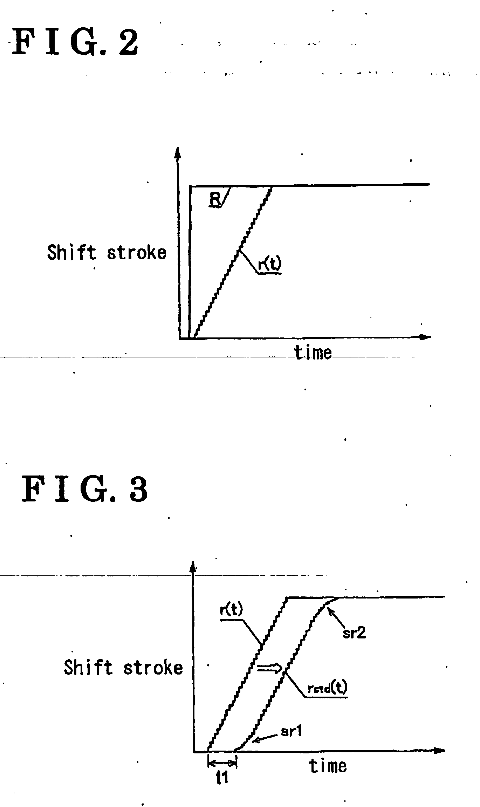

The rate limiter RL functions for generating a target shift stroke r(t) by limiting a variation of the shift stroke per control cycle relative to the target shift stroke value R so as to smooth the control of the shift operation. As illustrated in FIG. 2, the target shift stroke r(t) is generated to be increased step by step and to meet a whole shift stroke of the target shift stroke value R in approximately 0.1 sec. The target shift stroke r(t) is transmitted to the reference model M(s) and the PID controller $C_{pid}$(s).

2. PID control

A shift stroke error e(t) = r(t) - y(t) is generated as a deviation of the shift stroke y(t) transmitted via the other feedback loop relative to the target shift stroke r(t). The PID controller $C_{pid}$(s) generates a PID controlled amount $v_{PID}$(t) (i.e. an output from the PID controller $C_{pid}$(s)) corresponding to the shift stroke error e(t) in accordance with the following equation;

$$v_{PID}(t) = (Kp + Ki / s + Kd \cdot s) e(t),$$

The factors Kp, Ki, and Kd represent a proportional gain, an integral gain, and a differential gain, respectively. The function "s" represents a Laplace operator (d / dt). The PID controlled amount $v_{PID}$(t) is added with the error feedback amount transmitted from the reference model M(s).

3. Error feedback control by use of the reference model M(s)

The error feedback control is performed by use of the reference model M(s) and the first proportional amplifier AMP1. The reference model M(s) is inputted with the target shift stroke r(t) and outputs the reference model output $r_{std}$(t) which is an ideal response relative to the target shift stroke r(t). As illustrated in FIG. 3, the reference model M(s) is structured so as to output the reference model output $r_{std}$(t) possessing smoothing response portions sr1 and sr2 adjacent to a start point of the shift operation and an end point thereof so as to perform a smooth shift operation. Alternatively, the reference model M(s) can be structured so as to output the reference model output $r_{std}$(t) possessing either the smoothing response sr1 adjacent to the start point of the shift operation or the smoothing response portion sr2 adjacent to the end point thereof. A dead time exists at a starting portion due to a resolving ability of a sensor 7 for detecting a shift stroke. Therefore, the reference model M(s) is structured so as to output the reference model output $r_{std}$(t) possessing a dead time response portion t1 corresponding to the dead time. Therefore, the dead time can be absorbed.

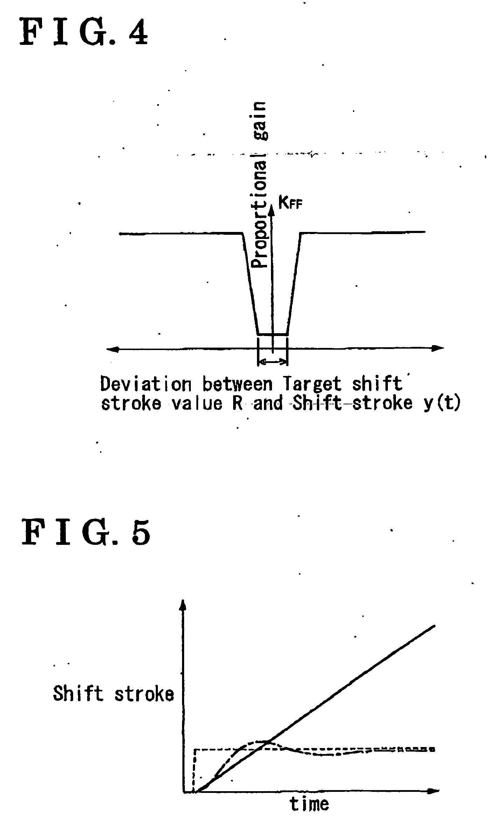

A deviation of the shift stroke y(t) relative to the reference model output $r_{std}$(t) is obtained. The deviation is applied with the proportional control by the first proportional amplifier AMP1 and returns to the mainstream of the control in the shift control apparatus 1 as an error feedback amount $v_{std}$(t). A proportional gain at the first proportional amplifier AMP1 is $K_{FF}$. Fig. 4 is a graph, of which horizontal axis represents a deviation between the target shift stroke value R and the shift stroke y(t) and vertical axis represents the proportional gain $K_{FF}$. As illustrated in FIG. 4, the proportional gain $K_{FF}$ is set at a small value within a range of the small deviation so as to rapidly control the shift operation and so as to restrain hunching. The proportional gain KFF is set at a constantly large value when the deviation exceeds a predetermined amount. The error feedback amount $v_{std}$(t) is obtained in accordance with the following equation;

$$V_{std}(t) = K_{FF} \left( r_{std}(t) - y(t) \right).$$

The error feedback amount $v_{std}(t)$ is added with the PID controlled amount $v_{PID}(t)$ and is transmitted to the second proportional amplifier AMP2 and the disturbance observer NOB.

4. Disturbance estimating process

The disturbance estimating process is performed by the disturbance observer NOB so as to calculate an estimated disturbance value $v_{obv}(t)$. Therefore, this process is effective for restraining the shift stroke y(t) from fluctuating due to the disturbance. The disturbance observer NOB is inputted with the error feedback amount $v_{std}(t)$, the PID control amount $v_{PID}(t)$, and the shift stroke y(t) and calculates the estimated disturbance value $v_{obv}(t)$ based upon the aforementioned values in accordance with the following equation;

$$\dot{x} = \begin{bmatrix} A_1 A_2 \\ A_3 A_4 \end{bmatrix} x + \begin{bmatrix} B_1 \\ B_2 \end{bmatrix} [(v_{PID}(t) + v_{std}(t) - (t)]$$

$$v_{obv}(t) = (C_1 C_2) \ x$$

According to the above-described equation, a first term in a right side member is relevant to a physical amount x. The factors $A_1$ through $A_4$, $B_1$, $B_2$, $C_1$, and $C_2$ are predetermined coefficients requisite for estimating the disturbance.

5. Calculation of the indicating electric current value u(t)

The error feedback amount $v_{std}(t)$ and the PID controlled amount $v_{PID}(t)$ are proportionally controlled by the second amplifier AMP2 and are added with the estimated disturbance value $v_{obv}(t)$ so as to generate the indicating electric current value u(t) in accordance with the following equation;

$$u(t) = Kp2 \left\{ \left( v_{std}(t) + v_{PID}(t) \right) - y(t) \right\} + v_{obv}(t).$$

6. Controlled object P(s)

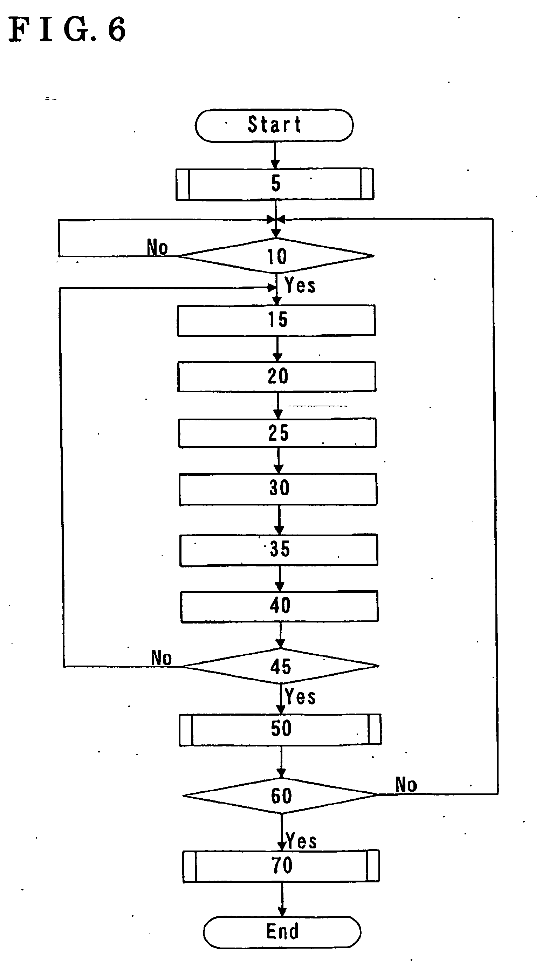

A characteristic of the controlled object P(s) itself is represented by a solid line in FIG. 5. The shift control apparatus 1 functions for appropriately controlling the shift stroke in response to the shift operation. Therefore, the controlled object P(s) is structured to be linearly responsible relative to the inputs thereto. The target shift stroke value R is represented by a broken line in FIG. 5. The characteristic of the controlled object P(s) stabilized by the feedback loop with the second proportional amplifier AMP2 is represented by a dashed line in FIG. 5. The shift stroke y(t) outputted from the controlled object P(s) is transmitted to predetermined units under the feedback control.
Next, the following description will be given for explaining the shift operation by the shift control apparatus 1 for the automated manual transmission 2 with reference to flow chart illustrated in FIG. 6.
As explained by the flow chart illustrated in FIG. 6, at step 5, the shift control apparatus 1 will be prepared for the shift operation control by turning on an ignition switch (not illustrated) and by initializing relevant units to the shift operation control. At step 10, the shift control apparatus 1 judges whether or not a detecting mechanism detects the operation of the shift lever 4 and whether or not the target shift stroke value R was changed. The indication of the shift operation is represented, for example by an indication of the shift operation which is generated in response to the driver's manual operation of the shift lever 4 from a neutral position to one side in the direction of the shift operation, operation of the accelerating pedal 6, or the like. The target shift stroke value R is changed corresponding to the indication of the shift operation.
When the shift control apparatus 1 judges at step 10 that the detecting mechanism detects the indication of the shift operation and the target shift stroke value R was changed, the control from step 15 to step 45 is repeatedly and sequentially performed until the shift stroke y(t) reaches the target shift stroke value R. One cycle form step 15 to step 45 is performed in approximately 2ms. At step 15, the target shift stroke r(t) is calculated by the rate limiter RL. At step 20, the reference model output $r_{std}(t)$ is calculated by the reference model M(s). At step 25, the PID controlled amount $v_{PID}(t)$ is calculated by the PID controller $C_{pid}(s)$. At step 30, the error feedback amount $v_{std}(t)$ is calculated by the first proportional amplifier AMP1. At step 35, the estimated disturbance value $v_{obv}(t)$ is calculated by the disturbance observer NOB. At step 40, the indicating electric current value u(t) is calculated by the second proportional amplifier AMP2.

At step 45, the shift control apparatus 1 judges whether or not the shift stroke y(t) has reached the target shift stroke value R. When the shift control apparatus 1 judges at step 45 that the shift stroke y(t) has reached the target shift stroke value R, the program proceeds to step 50 so as to terminate the shift control and electric current to the shift control apparatus 1 is cut off. At step 60, the shift control apparatus 1 judges whether or not the ignition switch is on. When the ignition switch is judged to be on, the shift control apparatus 1 judges that the shift control apparatus 1 is at a waiting condition for the next indication for the shift operation. Therefore, the program returns to step 10. On the other hand, when the ignition switch is judged to be off, the program proceeds to step 70 so as to terminate operation of the shift control apparatus 1.

According to the embodiment of the present invention, the reference model output $r_{std}(t)$ being the ideal response is generated by the reference model M(s) structured with an equation. Alternatively, the reference model M(s) can be structured as a time series map data so as to generate the reference modal output $r_{std}(t)$.

According to the embodiment of the present invention, the deviation of the shift stroke y(t) relative to the reference model output $r_{std}(t)$ is applied with the proportional control by the first proportional amplifier AMP1. Alternatively, the deviation can be applied with an integral control by a integral controller, a differential control by a differential controller, or the like, if necessary. Further, the deviation can be filtered with a filter in substitution for the proportional amplifier AMP1.

According to the embodiment of the present invention, the proportional gain $K_{FF}$ of the first proportional amplifier AMP1 is determined based upon the map data of the deviation between the target shift stroke value R and the shift stroke y(t), as illustrated in FIG. 4. Alternatively, the proportional gain $K_{FF}$ can be a constant value, or can be determined based upon a map data of the deviation between the target shift stroke r(t) and the shift stroke y(t), or of the deviation between the reference model output $r_{std}(t)$ and the shift stroke y(t).

According to the embodiment of the present invention, the PID controller $C_{pid}(s)$ is provided in the feedback loop. However, it is not only limited to the PID controller and any combinations of the proportional control, the integral control, and the differential control can be applicable.

According to the embodiment of the present invention, the proportional gain Kp2 of the second proportional amplifier AMP2, which is utilized for establishing the mathematical model of the controlled object P(s), functions for stabilizing the controlled object P(s). Alternatively, the controlled object P(s) can be stabilized by an integral controller, a differential controller or the like, if necessary. Further, the controlled object P(s) can be stabilized with a filter in substitution for the proportional amplifier AMP2. In this case, a deviation between a feedback control amount (illustrated in FIG. 1) and the shift stroke y(t) is applied with appropriate control in accordance with the change of the second proportional amplifier AMP2.

According to the embodiment of the present invention, the rate limiter RL limits the variation of the shift stroke per control cycle relative to the target shift stroke value R. Alternatively, the variation to be limited by the rate limiter RL can vary corresponding to the target shift stroke value R.

Further, the variation can be determined based upon a time series map data.

The principles, a preferred embodiment and mode of operation of the present invention have been described in the foregoing specification. However, the invention which is intended to be protected is not to be construed as limited to the particular embodiment disclosed. Further, the embodiment described herein are to be regarded as illustrative rather than restrictive.

## Claims

1.  A shift control apparatus (1) adapted to a transmission (2), which includes a synchronizing mechanism (S) for selectively synchronizing a pair of shift stage gears among plural shift stage gears having different gear ratios and to establish a predetermined shift stage among plural shift stages in response to operation of a shift and select operations mechanism (A) in order to shift the synchronizing mechanism (S), the shift control apparatus (1) controling a shift stroke (y(t)) determined by the shift and select operations mechanism (A) as an operation information of the transmission (2) to correspond to a target shift stroke (r(t)):

    characterized in that the shift control apparatus (1) includes
    a PID controlling means ($C_{pid}(s)$) for calculating a PID controlled amount ($V_{PID}(t)$) from a gain comprising a proportional gain (Kp), an integral gain (ki) and a differential gain (Kd) on the basis of a deviation between the target shift stroke (r(t)) and the shift stroke (y(t)) and applying a PID control on the basis of the PID controlled amount ($V_{PID}$(t));

a reference model controlling means (M(s), AMP1) for calculating an error feedback amount ($V_{std}$(t) in manner where the proportional gain (Kp) is multiplied relative to a deviation between an ideal response ($r_{std}$(t)) and the shift stroke (y(t)) in order to approximate the shift stroke (y(t)) to the ideal response ($r_{std}$(t)), which is obtained on the basis of the target shift stroke (r(t));

a stabilizing controlling means (AMP2) for stabilizing a model of a controlled object (P(s)) through a feedback loop corresponding to a shift operation of the shift and select operations mechanism (A) along with the PID control by dual feedback loops including a feedback loop executed by the PID controlling means ($C_{pid}$(s)); and

a disturbance observing mechanism (NOB) for eliminating a disturbance by feed backing an estimated disturbance value ($v_{obv}$(t)) calculated based upon an input to the model of the controlled object and an output from the model of the controlled object (P(s)) including the shift stroke (y(t)), the PID controlled amount ($V_{PID}$(t)) and the error feedback amount ($V_{std}$(t)) and being stabilized.

2. A shift control apparatus (1) according to claim 1, wherein the reference model controlling means (M(s), AMP1) includes a reference model (M(s)) outputting the ideal response ($r_{std}$(t)) and a first proportional controlling means (AMP1) for applying a proportional control to the deviation between the shift stroke (y(t)) and the ideal response ($r_{std}$(t)) with a second proportional gain ($K_{FF}$) determined corresponding to a deviation between the shift stroke (y(t)) and a target shift stroke value (R) being an ultimate shift stroke required by a shift operation of a shift lever.

3. A shift control apparatus (1) according to claim 1 or 2, wherein the ideal response ($r_{std}$(t)) used by the reference model controlling means includes a smoothing response portion (sr1, sr2) immediately after the start of the shift operation of the shift and select operations mechanism (A) or immediately prior to the end of the shift operation so as to smooth the shift operation, and a dead time response portion (t1) corresponding to a dead time caused due to a characteristic of a sensor (7) for detecting the shift stroke (y(t)) when the shift operation of the shift and select operations mechanism (A) is started.

4. A shift control apparatus (1) according to any of claims 1 through 3, **characterized in that** the shift control apparatus (1) further includes a rate limiting means (RL) for generating the target shift stroke (r(t)) by limiting a variation of the shift stroke (y(t)) at a predetermined control cycle corresponding to the target shift stroke value (R).

5. A shift control apparatus (1) according to any of claims 1 through 4, wherein the stabilizing controlling means includes a second proportional controlling means (AMP2).

6. A shift control apparatus (1) according to claim 5 depending on claim 2 wherein each first and second proportional controlling means includes a proportional amplifier, a proportional amplifier added with an integral controlling means and/or a differential controlling means, and a filter.

7. A shift control apparatus (1) according to claim 2 or any of claims 3 to 6 when dependent on claim 2 wherein the second proportional gain ($K_{FF}$) is determined at a constant value, or is determined corresponding to a deviation between the target shift stroke (r(t)) and the shift stroke (y(t)), or a deviation between the ideal response ($r_{std}$(t)) and the shift stroke (y(t)).

**Patentansprüche**

1. Schaltungssteuerungsvorrichtung (1), die an ein Getriebe (2) angepasst ist, das einen Synchronisiermechanismus (S) zum selektiven Synchronisieren eines Paars von Schaltstufenzahnrädern unter mehreren Schaltstufenzahnrädern mit unterschiedlichen Übersetzungsverhältnissen, und um eine vorbestimmte Schaltstufe unter mehreren Schaltstufen in Reaktion auf einen Betrieb eines Schalt- und Auswahlbetriebsmechanismus (A), um den Synchronisiermechanismus (S) zu schalten, zu etablieren, wobei die Schaltungssteuerungsvorrichtung (1) einen Schalthub (y(t)), der durch den Schalt- und Auswahlbetriebsmechanismus (A) als eine Betriebsinformation des Getriebes (2) bestimmt wird, steuert, um einem Sollschalthub (r(t)) zu entsprechen:

**dadurch gekennzeichnet, dass** die Schaltsteuerungsvorrichtung (1) umfasst:

eine PID-Steuerungseinrichtung ($C_{pid}$(s)) zur Berechnung einer PID-gesteuerten Größe ($V_{PID}$(t)) aus einer Verstärkung, die eine Proportionalverstärkung (Kp), eine Integralverstärkung (ki) und eine Differenzialverstärkung (Kd) umfasst, auf der Grundlage einer Abweichung zwischen dem Sollschalthub (r(t)) und dem Schalthub (y(t)) und zum Anwenden einer PID-Steuerung auf der Grundlage der PID-gesteuerten Größe ($V_{PID}$(t)),

eine Bezugsmodellsteuerungseinrichtung (M(s), AMP1) zur Berechnung einer Fehlerrückkopplungsgröße ($V_{std}$(t)) in einer Art und Weise, bei der die Proportionalverstärkung (Kp) relativ zu einer Abweichung zwischen einer idealen Antwort ($r_{std}$(t)) und dem Schalthub (y(t)) multipliziert wird, um den Schalthub (y(t)) an die ideale Antwort ($r_{std}$(t)) anzunähern, die auf der Grundlage des Sollschalthubs (r(t)) erhalten wird,

eine Stabilisierungssteuerungseinrichtung (AMP2) zur Stabilisierung eines Modells eines gesteuerten Gegenstands (P(s)) durch eine Rückkopplungsschleife entsprechend einem Schaltbetrieb des Schalt- und Ausfallbetriebsmechanismus (A) zusammen mit der PID-Steuerung durch zweifache Rückkopplungsschleifen, die eine Rückkopplungsschleife umfassen, die durch die PID-Steuerungseinrichtung ($C_{pid}$(s)) ausgeführt wird, und

einen Störungsbeobachtungsmechanismus (NOB) zur Beseitigung einer Störung, indem ein geschätzter Störungswert ($v_{obv}$(t)) rückgekoppelt wird, der auf der Grundlage einer Eingabe bei dem Modell des gesteuerten Gegenstands und einer Ausgabe von dem Modell des gesteuerten Gegenstands (P(s)) berechnet wird, die den Schalthub (y(t)), die PID-gesteuerte Größe ($V_{PID}$(t)) und die Fehlerrückkopplungsgröße ($V_{std}$(t)) umfasst und stabilisiert ist.

2. Schaltungssteuerungsvorrichtung (1) nach Anspruch 1, wobei die Bezugsmodellsteuerungseinrichtung (M(s), AMP1) ein Bezugsmodell (M(s)), das die ideale Antwort ($r_{std}$(t)) ausgibt, und eine erste Proportionalsteuerungseinrichtung (AMP1) zum Anwenden einer Proportionalsteuerung bei der Abweichung zwischen dem Schalthub (y(t)) und der idealen Antwort ($r_{std}$(t)) mit einer zweiten Proportionalverstärkung ($K_{FF}$) umfasst, die entsprechend einer Abweichung zwischen dem Schalthub (y(t)) und einem Sollschalthubwert (R) bestimmt wird, der ein endgültiger Schalthub ist, der durch einen Schaltbetrieb eines Schalthebels erforderlich ist.

3. Schaltungssteuerungsvorrichtung (1) nach Anspruch 1 oder 2, wobei die ideale Antwort ($r_{std}$(t)), die durch die Bezugsmodellsteuerungseinrichtung verwendet wird, einen Glättungsantwortabschnitt (sr1, sr2) unmittelbar nach dem Start des Schaltbetriebs des Schalt- und Auswahlbetriebsmechanismus (A) oder unmittelbar vor dem Ende des Schaltbetriebs, um den Schaltbetrieb zu glätten, und einen Totzeitantwortabschnitt (t1) umfasst, der einer Totzeit entspricht, die aufgrund einer Eigenschaft eines Sensors (7) zur Erfassung des Schalthubs (y(t)) verursacht wird, wenn der Schaltbetrieb des Schalt- und Auswahlbetriebsmechanismus (A) gestartet wird.

4. Schaltungssteuerungsvorrichtung (1) nach einem der Ansprüche 1 bis 3, **dadurch gekennzeichnet, dass** die Schaltungssteuerungsvorrichtung (1) ferner eine Geschwindigkeitsbegrenzungseinrichtung (RL) zur Erzeugung des Sollschalthubs (r(t)) umfasst, indem eine Veränderung des Schalthubs (y(t)) bei einem vorbestimmten Steuerungszyklus entsprechend dem Sollschalthubwert (R) begrenzt wird.

5. Schaltungsteuerungsvorrichtung (1) nach einem der Ansprüche 1 bis 4, wobei die Stabilisierungssteuerungseinrichtung eine zweite Proportionalsteuerungseinrichtung (AMP2) umfasst.

6. Schaltungssteuerungsvorrichtung (1) nach Anspruch 5 in Abhängigkeit von Anspruch 2, wobei jede der ersten und zweiten Proportionalsteuerungseinrichtungen einen Proportionalverstärker, einen Proportionalverstärker, zu dem eine Integralsteuerungseinrichtung und/oder eine Differenzialsteuerungseinrichtung hinzugefügt sind/ist, und einen Filter umfasst.

7. Schaltungssteuerungsvorrichtung (1) nach Anspruch 2 oder einem der Ansprüche 3 bis 6, wenn sie von Anspruch 2 abhängig sind, wobei die zweite Proportionalverstärkung ($K_{FF}$) als ein konstanter Wert bestimmt wird oder entsprechend einer Abweichung zwischen dem Sollschalthub (r(t)) und dem Schalthub (y(t)) oder einer Abweichung zwischen der idealen Antwort ($r_{std}$(t)) und dem Schalthub (y(t)) bestimmt wird.

**Revendications**

1. Dispositif de commande de changement de vitesse (1) adapté à une transmission (2), qui inclut un mécanisme de synchronisation (S) pour synchroniser sélectivement une paire d'engrenages de vitesse parmi plusieurs engrenages de vitesses ayant différents rapports d'engrenage et pour établir une vitesse prédéterminée parmi plusieurs vitesses en réponse à l'actionnement d'un mécanisme de sélection et de changement de vitesse (A) afin de déplacer le mécanisme de synchronisation (S), le dispositif de commande de changement de vitesse (1) commandant une première course (y(t)) déterminée par le mécanisme de sélection et de changement de vitesse (A) comme une information de fonctionnement de la transmission (2) pour correspondre à une course de changement de vitesse cible (r(t)) ;

**caractérisé en ce que** le dispositif de commande de changement de vitesse (1) inclut

des moyens de commande PID ($C_{pid}$(s)) pour calculer une valeur commandée par PID ($V_{PID}$(t)) à partir d'un gain comprenant un gain proportionnel (Kp), un gain intégral (Ki) et un gain dérivé (Kd) sur la base d'une déviation entre la course de changement de vitesse cible (r(t)) et la course de changement de vitesse (y(t)) et appliquer une commande PID en se basant sur la valeur commandée par PID ($V_{PID}$(t)) ;

de moyens de commande de modèle de référence (M(s), AMP1) pour calculer une valeur de rétroaction d'erreur ($V_{std}$(t)) de telle manière que le gain proportionnel (Kp) est multiplié relativement à une déviation entre une réponse idéale ($r_{std}$(t)) et la course de changement de vitesse (y(t)) afin d'approximer la course de changement de vitesse (y(t)) à la réponse idéale ($r_{std}$(t)), qui est obtenue en se basant sur la course de changement de vitesse cible (r(t)) ;

des moyens de commande de stabilisation (AMP2) pour stabiliser un modèle d'un objet commandé (P(s)) par l'intermédiaire d'une boucle de rétroaction correspondant à une opération de changement de vitesse du mécanisme de sélection et de changement de vitesse (A) conjointement avec la commande PID par des boucles de rétroaction doubles incluant une boucle de rétroaction exécutée par les moyens de commande PID ($C_{pid}$(s)) ; et

un mécanisme d'observation de perturbation (NOB) pour éliminer une perturbation par rétroaction d'une valeur de perturbation estimée ($v_{obv}$(t)) calculée en se basant sur une entrée vers le modèle de l'objet commandé et une sortie du modèle de l'objet commandé (P(s)) incluant la course de changement de vitesse (y(t)), la valeur commandée par PID ($V_{PID}$(t)), et la valeur de rétroaction d'erreur ($V_{std}$(t)) et étant stabilisée.

2. Dispositif de commande de changement de vitesse (1) selon la revendication 1, dans lequel les moyens de commande de modèle de référence (M(s), AMP1) incluent un modèle de référence (M(s)) sortant la réponse idéale ($r_{std}$(t)) et des premiers moyens de commande proportionnelle (AMP1) pour appliquer une commande proportionnelle à la déviation entre la course de changement de vitesse (y(t)) et la réponse idéale ($r_{std}$(t)) avec un second gain proportionnel ($K_{FF}$) déterminé correspondant à une déviation entre la course de changement de vitesse (y(t)) et une valeur de course de changement de vitesse cible (R) étant une course de changement de vitesse ultime requise par une opération de changement de vitesse d'un levier de vitesse.

3. Dispositif de commande de changement de vitesse (1) selon la revendication 1 ou 2, dans lequel la réponse idéale ($r_{std}$(t)) utilisée par les moyens de commande de modèle de référence inclut une partie de réponse de lissage (sr1, sr2) immédiatement après le début de l'opération de changement de vitesse du mécanisme de sélection et de changement de vitesse (A) ou immédiatement avant la fin de l'opération de changement de vitesse de façon à lisser l'opération de changement de vitesse, et une partie de réponse de temps mort (t1) correspondant à un temps mort causé du fait d'une caractéristique d'un capteur (7) de détection de la course de changement de vitesse (y(t)) quand le mécanisme de sélection et de changement de vitesse (A) est démarré.

4. Dispositif de commande de changement de vitesse (1) selon l'une quelconque des revendications 1 à 3, **caractérisé en ce que** le dispositif de commande de changement de vitesse (1) inclut en outre des moyens de limitation de vitesse (RL) pour générer la course de changement de vitesse cible (r(t)) en limitant une variation de la course de changement de vitesse (y(t)) au niveau d'un cycle de commande prédéterminé correspondant à la valeur de course de changement de vitesse cible (R).

5. Dispositif de commande de changement de vitesse (1) selon l'une quelconque des revendications 1 à 4, dans lequel les moyens de commande de stabilisation incluent des seconds moyens de commande proportionnels (AMP2).

6. Dispositif de commande de changement de vitesse (1) selon la revendication 5 dépendant de la revendication 2, dans lequel chacun des premier et second moyens de commande proportionnels inclut un amplificateur proportionnel, un amplificateur proportionnel augmenté de moyens de commande intégrale et/ou des moyens de commande dérivée, et un filtre.

7. Dispositif de commande de changement de vitesse (1) selon l'une quelconque des revendications 3 à 6, dépendant de la revendication 2, dans lequel le second gain proportionnel ($K_{FF}$) est déterminé à une valeur constante, ou est déterminé correspondant à une déviation entre la course de changement de vitesse cible (r(t)) et la course de changement de vitesse (y(t)), ou à une déviation entre la réponse idéale ($r_{std}$(t)) et la course de changement de vitesse (y(t)).

FIG. 1

# FIG. 2

# FIG. 3

# FIG. 4

Deviation between Target shift
stroke value R and Shift-stroke y(t)

# FIG. 5

EP 1 355 092 B1

# F I G. 6

```
        ┌─────────────┐
        │    Start     │
        └──────┬──────┘
               ↓
        ║      5      ║
               ↓
  No  ◇      10      ◇
               │Yes
        │     15      │
               ↓
        │     20      │
               ↓
        │     25      │
               ↓
        │     30      │
               ↓
        │     35      │
               ↓
        │     40      │
               ↓
  No  ◇      45      ◇
               │Yes
        ║     50      ║
               ↓
        ◇      60      ◇  No
               │Yes
        ║     70      ║
               ↓
        ┌─────────────┐
        │     End     │
        └─────────────┘
```

13

# FIG. 7

# F I G. 8

Shift operation

1st shift stage   3rd shift stage   5th shift stage

4

2nd shift stage   4th shift stage   R

Select operation

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0545597 A1